# FASCICULE DE BREVET EUROPEEN

(11) **EP 0 887 228 B1**
(45) Date de publication et mention de la délivrance du brevet: **13.11.2002**
(21) Numéro de dépôt: 98401500.8
(22) Date de dépôt: 18.06.1998
(51) Int. Cl.: B60Q 1/068

(54) **Dispositif de réglage de l'orientation d'un faisceau lumineux émis par un projecteur de véhicule automobile**
Vorrichtung zur Kontrolle der Neigung des Lichtstrahls eines Kfz-Scheinwerfers
Light beam aiming device for a vehicle headlamp

(30) Priorité: 23.06.1997 FR 9707790
(43) Date de publication de la demande: 30.12.1998
(73) Titulaire: AUTOMOBILES PEUGEOT, 75116 Paris (FR); AUTOMOBILES CITROEN, 92200 Neuilly-sur-Seine (FR)
(72) Inventeur: Jamilloux, Olivier, 78540 Vernouillet (FR)
(74) Mandataire: Bentz, Jean-Paul

(56) Documents cités:
- DE-A- 2 339 837
- DE-A- 3 028 700
- FR-A- 2 577 013
- FR-A- 2 624 453
- PATENT ABSTRACTS OF JAPAN vol. 10, no. 134 (M-479) [2191], 17 mai 1986 & JP 60 259539 A (NISSAN JIDOSHA KK), 21 décembre 1985

## Description

La présente invention concerne un dispositif de réglage de l'orientation d'un faisceau lumineux émis par un projecteur et un véhicule automobile équipé de ce dispositif.

Un dispositif selon le préambule de la revendication 1 est connu du document FR 2 624 453A.>

On connaît, par exemple par FR 2 636 578 et FR 2 725 169, des dispositifs de réglage de projecteur, du type utilisant trois points d'appui disposés en triangle. En général, ils permettent un réglage manuel de l'orientation latérale, ou en azimut du projecteur et un réglage motorisé de l'orientation verticale, ou en site, de celui-ci.

Certains véhicules sont également équipés d'un système de réglage automatique de l'orientation du faisceau des projecteurs, notamment lorsqu'ils sont équipés de lampes à décharges, de façon à ne pas éblouir les autres véhicules. A cet effet, un moteur électrique, généralement pas-à-pas, est asservi à un circuit électronique de calcul de la correction à effectuer. Toutefois, dans ce cas aussi, les projecteurs doivent être réglés initialement, lors de leur montage sur le véhicule. Ce réglage manuel est effectué aussi bien en site qu'en azimut et il ne doit pas être modifié par la correction automatique ultérieure. Si ces deux types de réglage sont interdépendants, il peut en résulter un cumul indésirable des jeux de fonctionnement propres à chacune des fonctions.

Ces dispositifs ont également une structure complexe et ne peuvent pas facilement être adaptés à des véhicules dans lesquels la correction automatique n'est pas nécessaire. En effet, lorsque les projecteurs ne sont pas équipés de lampe à décharges ou lorsque les véhicules sont équipés d'un autre moyen de correction automatique, par exemple une suspension active, les moyens de réglage habituels de l'orientation du réflecteur peuvent suffire.

L'invention a donc pour but d'éliminer les inconvénients précités et de proposer un nouveau dispositif de réglage dans lequel les fonctions de réglage initial, en site et en azimut, sont indépendantes de la correction automatique éventuelle.

A cet effet, l'invention a pour objet un dispositif de réglage selon deux directions perpendiculaires de l'orientation d'un faisceau lumineux émis par un projecteur comprenant un réflecteur supporté sur une structure fixe par des premier, second, et troisième points d'appui pivotants agencés respectivement au sommet de l'angle droit et aux autres sommets d'un triangle rectangle, dans lequel les second et troisième points d'appui sont aptes à être déplacés dans une direction généralement perpendiculaire au plan du triangle par des mécanismes de réglage manuel distincts, caractérisé par un coulisseau guidé sur ladite structure dans la direction généralement perpendiculaire au plan du triangle, le coulisseau comportant un corps auquel est connecté le premier point d'appui et un bras élastiquement déformable connecté d'une part au second point d'appui et coopérant d'autre part avec l'un des mécanismes de réglage manuel pour déplacer le second point d'appui et faire pivoter le réflecteur autour de l'axe passant par les premier et troisième points d'appui.

Dans un premier mode de réalisation, le corps du coulisseau est connecté à un organe d'entraînement pour déplacer simultanément et sur la même distance les premier et second points d'appui et faire pivoter le réflecteur autour d'un axe passant par le troisième point d'appui. L'organe d'entraînement peut être constitué d'un moteur électrique dont l'arbre moteur est connecté au corps du coulisseau pour le déplacer en translation.

Dans un autre mode de réalisation, des moyens de retenue, par exemple des pattes ou analogues, sont prévus pour immobiliser le corps du coulisseau dans ladite direction généralement perpendiculaire au plan du triangle. Dans ce cas, le projecteur ne comporte pas de système de réglage automatique de l'orientation du faisceau.

Selon une autre caractéristique, le corps du coulisseau et le mécanisme de réglage coopérant avec le bras élastiquement déformable sont solidaires en translation dans la direction généralement perpendiculaire au plan du triangle. Dans ce cas, le mécanisme de réglage manuel peut être vissé à travers le corps du coulisseau et venir en appui contre une face du bras élastiquement déformable opposée à celle connectée au second point d'appui.

Selon encore une autre caractéristique, l'autre mécanisme de réglage manuel est connecté au troisième point d'appui pour le déplacer et faire pivoter le réflecteur autour de l'axe passant par les premier et second points d'appui.

Dans une forme de réalisation particulière, le coulisseau peut présenter une forme générale en V dont la base est guidée par un rail sur la structure fixe et dont les extrémités des branches sont guidées par un rail opposé sur ladite structure. Dans ce cas, le premier point d'appui peut être connecté à la base du V et l'une des branches du V constitue le bras élastiquement déformable.

L'invention vise également un véhicule automobile équipé du dispositif précité.

L'invention sera mieux comprise, et d'autres buts, détails, caractéristiques et avantages de celle-ci apparaîtront plus clairement au cours de la description explicative détaillée qui va suivre de deux modes de réalisation particuliers actuellement préférés de l'invention, donnés uniquement à titre illustratif et non limitatif, en référence aux dessins schématiques annexés, dans lesquels :

La figure 1 est une vue de face d'un projecteur.

La figure 2 est une vue arrière du projecteur de la figure 1.

La figure 3 est une vue partielle et en coupe horizontale du dispositif de l'invention suivant un premier mode de réalisation.

La figure 4 est une vue en perspective des parties essentielles du dispositif de la figure 3.

La figure 5 est une vue analogue à la figure 3, mais représentant un autre mode de réalisation.

La figure 6 est une vue analogue à la figure 4, mais représentant le mode de réalisation de la figure 5.

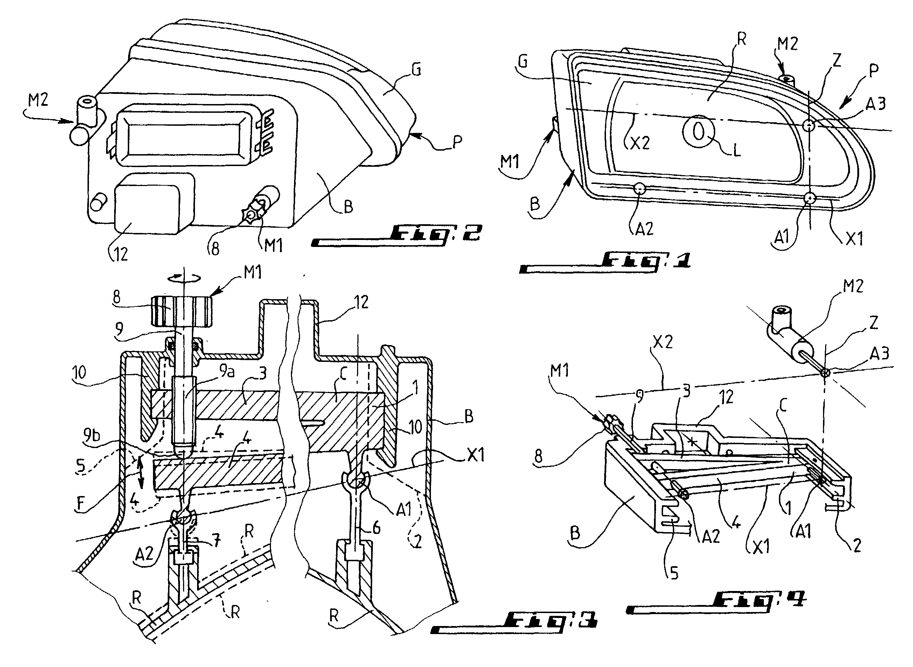

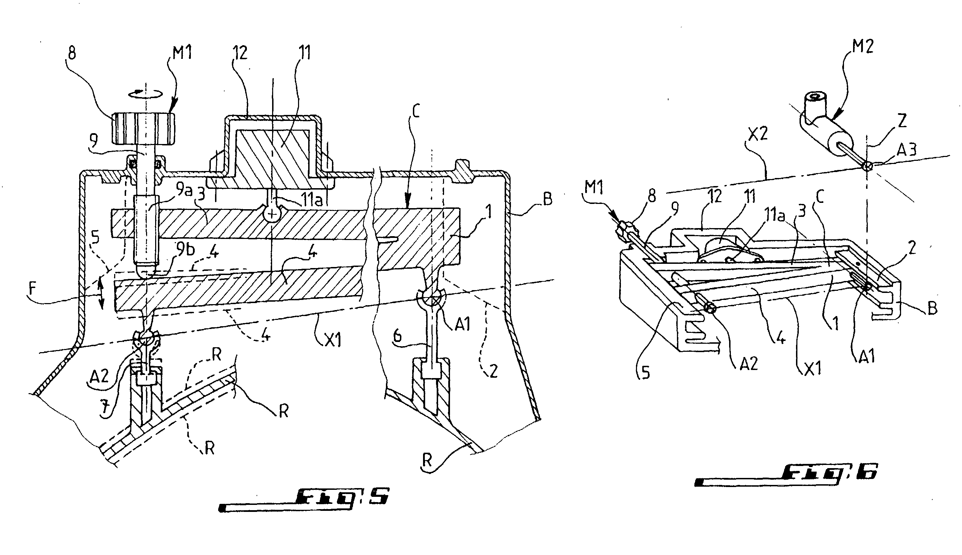

En se référant maintenant à l'exemple de réalisation représenté sur les figures 1 à 4, on voit un projecteur P comportant un réflecteur R muni d'une lampe L et logé dans un boîtier B fermé à l'avant par une glace G, d'une manière connue en soi.

De manière classique, le réflecteur R est supporté sur le boîtier B par l'intermédiaire de trois points d'appui pivotants agencés aux sommets d'un triangle rectangle, le point A1 correspondant à l'angle droit et les points A2 et A3 étant respectivement alignés horizontalement à côté et verticalement au-dessus de celui-ci.

Le projecteur est également muni d'un mécanisme de réglage manuel M1 pour déplacer en translation le point A2 dans une direction généralement perpendiculaire au plan du triangle indiquée par la flèche F et d'un mécanisme de réglage manuel M2 pour déplacer le point A3 dans cette même direction. D'une manière classique dans la technique, ce mécanisme M1 permet de varier l'orientation en azimut du réflecteur en le faisant pivoter autour de l'axe Z passant par les points A1 et A3, et le mécanisme M2 permet de faire varier l'orientation en site du réflecteur R en le faisant pivoter autour de l'axe X1 passant par les points A1 et A2.

Comme visible sur les dessins, le mécanisme M2 est indépendant des autres mécanismes du projecteur. Il peut donc être choisi parmi les mécanismes connus dans la technique.

Le dispositif de l'invention comporte en outre un coulisseau C en forme générale de V dont la base 1 s'engage dans un rail latéral 2 formé latéralement en saillie à l'intérieur du boîtier B et dont les extrémités libres des deux branches 3, 4 s'engagent elles aussi dans un rail latéral opposé 5 formé à l'intérieur du boîtier B.

Le point d'appui A1 est porté par la base 1 du coulisseau en forme de V et s'articule par une liaison sphérique sur un montant 6 relié au réflecteur R. La branche 4 du coulisseau la plus proche du réflecteur R porte le second point d'appui A2 qui s'articule également par une liaison sphérique sur un montant 7 relié au réflecteur R. Le bras 4 présente une certaine élasticité en flexion de façon à pouvoir être élastiquement déformé sous l'action du premier mécanisme de réglage manuel M1, comme indiqué par les différentes positions en traits interrompus. Ce premier mécanisme de réglage manuel M1 se présente sous la forme d'une mollette de réglage 8 se prolongeant axialement par une tige 9 qui comporte une portion filetée 9a vissée à travers la deuxième branche 3 et se terminant par une extrémité 9b destinée à venir en appui contre la branche élastiquement déformable 4 pour déplacer le deuxième point d'appui A2, comme indiqué par la double flèche F. On comprend ainsi qu'en tournant la mollette 8, l'ensemble du mécanisme M1 se déplace par rapport au boîtier et entraîne un déplacement correspondant de la branche 4.

Bien que l'extrémité 9a de la tige 9 soit en appui simple contre le bras 4, le mécanisme M1 peut faire varier l'orientation du réflecteur dans les deux sens, en raison du rappel élastique propre au bras 4.

On voit enfin sur la figure 3 que l'extrémité libre de la branche 3 et la base 1 du coulisseau C sont maintenues fixement en position par des pattes de retenue ou analogues 10, de façon que seule la branche 4 puisse se déplacer en se déformant en flexion.

En se référant maintenant aux figures 5 et 6, le réflecteur du deuxième mode de réalisation est équipé en outre d'un système de réglage automatique de l'orientation en site du réflecteur R.

Ce mode de réalisation présente une structure générale analogue au premier mode de réalisation et ne diffère de celui-ci que par la présence d'un moteur électrique 11 dont l'arbre de sortie 11a est solidarisé en translation à la branche 3 du coulisseau C, les pattes de retenue du coulisseau étant bien entendu supprimées ou omises. Un logement en saillie vers l'extérieur 12 est formé sur le boîtier B pour recevoir le moteur 11. Le moteur 11 peut ainsi déplacer simultanément et sur la même distance à la fois les points A1 et A2 dans la direction F généralement perpendiculaire au plan du triangle, ce qui provoque la rotation du réflecteur R autour d'un axe X2 passant par le troisième point d'appui A3 et parallèle à l'axe X1.

Le dispositif de l'invention permet donc un réglage automatique de l'orientation en site du faisceau lumineux en faisant pivoter le réflecteur autour d'un axe X2 différent de l'axe X1 autour duquel tourne le réflecteur R lors du réglage manuel de l'orientation en site du faisceau lumineux.

Le réglage manuel est donc indépendant du réglage automatique motorisé, ce qui supprime tout risque de déréglage ou de cumul de jeu.

Le dispositif de l'invention est également universel au sens où la même structure, à l'exception de quelques organes qui sont facilement montés ou démontés, sert à la fois pour un réglage uniquement manuel et pour un réglage à la fois manuel et automatisé.

De préférence, l'arbre de sortie 11a de l'arbre moteur 1 est connecté au centre du bras 3 du coulisseau C.

Les pattes 10 peuvent venir de moulage avec le boîtier B, et dans ce cas, elles sont découpées lorsque le système de réglage automatique est installé.

## Revendications

1. Dispositif de réglage selon deux directions perpendiculaires de l'orientation d'un faisceau lumineux émis par un projecteur (P) comprenant un réflecteur (R) supporté sur une structure fixe (B) par des premier, second, et troisième points d'appui pivotants (A1, A2, A3) agencés respectivement au sommet de l'angle droit et aux autres sommets d'un triangle rectangle, et un coulisseau (C) guidé sur ladite structure (B) dans la direction (F) généralement perpendiculaire au plan du triangle, le coulisseau (C) comportant un corps (1,3) auquel est connecté le premier point d'appui (A1) et un bras (4) connecté, d'une part, au second point d'appui (A2) et coopérant, d'autre part, avec un mécanisme de réglage manuel (M1) pour déplacer le second point d'appui (A2) et faire pivoter le réflecteur (R) autour de l'axe (Z) passant par les premier et troisième points d'appui (A1, A3), **caractérisé en ce que** le bras (4) est élastiquement déformable et **en ce que** le troisième point d'appui (A3) est apte à être déplacé dans une direction (F) généralement perpendiculaire au plan du triangle par un mécanisme de réglage manuel (M2) distinct du méchanisme de réglage (M1).

2. Dispositif selon la revendication 1, **caractérisé en ce que** le corps (1, 3) du coulisseau (C) est connecté à un organe d'entraînement (11) pour déplacer simultanément et sur la même distance les premier et second points d'appui (A1, A2) et faire pivoter le réflecteur (R) autour d'un axe (X2) passant par le troisième point d'appui (A3).

3. Dispositif selon la revendication 2, **caractérisé en ce que** l'organe d'entraînement est constitué d'un moteur électrique (11) dont l'arbre moteur (11a) est connecté au corps (1,3) du coulisseau (C) pour le déplacer en translation.

4. Dispositif selon la revendication 1, **caractérisé en ce que** des moyens de retenue (10), par exemple des pattes, sont prévus pour immobiliser le corps (1,3) du coulisseau (C) dans ladite direction (F) généralement perpendiculaire au plan du triangle.

5. Dispositif selon l'une des revendications précédentes, **caractérisé en ce que** le corps (1,3) du coulisseau (C) et le mécanisme de réglage (M1) coopérant avec le bras élastiquement déformable (4) sont solidaires en translation dans la direction (F) généralement perpendiculaire au plan du triangle.

6. Dispositif selon la revendication 5, **caractérisé en ce que** le mécanisme de réglage manuel (M1) est vissé à travers le corps (1,3) du coulisseau (C) et vient en appui contre une face du bras élastiquement déformable (4) opposée à celle connectée au second point d'appui (A2).

7. Dispositif selon l'une des revendications précédentes, **caractérisé en ce que** l'autre mécanisme de réglage manuel (M2) est connecté au troisième point d'appui (A3) pour le déplacer et faire pivoter le réflecteur (R) autour de l'axe (X1) passant par les premier et second points d'appui (A1, A2).

8. Dispositif selon l'une des revendications précédentes, **caractérisé en ce que** le coulisseau (C) présente une forme générale en V, dont la base (1) est guidée par un rail (2) sur la structure fixe (B) et dont les extrémités des deux branches (3, 4) sont guidées par un rail opposé (5) sur ladite structure.

9. Dispositif selon la revendication 8, **caractérisé en ce que** le premier point d'appui (A1) est connecté à la base (1) du coulisseau (C) et l'une (4) des branches du coulisseau (C) constitue le bras élastiquement déformable.

## Claims

1. A device for adjusting in two perpendicular directions the orientation of a light beam emitted by a headlamp (P) including a reflector (R) supported on a fixed structure (B) by first, second and third pivoting bearing points (A1, A2, A3) respectively at the right-angle vertex and the other vertices of a right-angle triangle and a slider (C) guided on said structure (B) in the direction (F) generally perpendicular to the plane of the triangle, the slider (C) including a body (1, 3) to which the first bearing point (A1) is connected and an arm (4) which, on the one hand, is connected to the second bearing point (A2) and, on the other hand, co-operates with a manual adjustment mechanism (M1) for moving the second bearing point (A2) and pivoting the reflector (R) about the axis (Z) passing through the first and third bearing points (A1, A3), **characterised in that** the arm (4) is elastically deformable and **in that** the third bearing point (A3) can be moved in a direction (F) generally perpendicular to the plane of the triangle by a manual adjustment mechanism (M2) separate from the adjustment mechanism (M1).

2. A device according to claim 1, **characterised in that** the body (1, 3) of the slider (C) is connected to a drive member (11) for moving the first and second bearing points (A1, A2) simultaneously the same distance and pivoting the reflector (R) about an axis (X2) passing through the third bearing point (A3).

3. A device according to claim 2, **characterised in that** the drive member comprises an electric motor (11) whose drive shaft (11a) is connected to the body (1, 3) of the slider (C) to move it in translation.

4. A device according to claim 1, **characterised in that** retaining means (10), for example lugs, are provided for immobilising the body (1, 3) of the slider (C) in said direction (F) generally perpendicular to the plane of the triangle.

5. A device according to any preceding claim, **characterised in that** the body (1, 3) of the slider (C) and the adjustment mechanism (M1) co-operating with the elastically deformable arm (4) are constrained to move together in translation in the direction (F) generally perpendicular to the plane of the triangle.

6. A device according to claim 5, **characterised in that** the manual adjustment mechanism (M1) is screwed through the body (1, 3) of the slider (C) and bears against a face of the elastically deformable arm (4) opposite that connected to the second bearing point (A2).

7. A device according to any preceding claim, **characterised in that** the other manual adjustment mechanism (M2) is connected to the third bearing point (A3) to move it and pivot the reflector (R) about the axis (X1) passing through the first and second bearing points (A1, A2).

8. A device according to any preceding claim, **characterised in that** the slider (C) is generally V-shaped with the base (1) guided by a rail (2) on the fixed structure (B) and the ends of the two branches (3, 4) guided by an opposite rail (5) on said structure.

9. A device according to claim 8, **characterised in that** the first bearing point (A1) is connected to the base (1) of the slider (C) and one branch (4) of the slider (C) constitutes the elastically deformable arm.

## Patentansprüche

1. Vorrichtung zum Einstellen der Ausrichtung eines Lichtbündels, das von einem Scheinwerfer (P) ausgesandt wird, in zwei zueinander senkrechten Richtungen, mit einem Reflektor (R), der an einem festen Aufbau (B) durch einen ersten, einen zweiten und einen dritten schwenkbeweglichen Abstützpunkt (A1, A2, A3) getragen wird, die am Scheitel des rechten Winkels und an den weiteren Scheiteln eines rechtwinkligen Dreiecks angeordnet sind, und einem Schieber (C), der am genannten Aufbau (B) in einer Richtung (F) geführt ist, die allgemein senkrecht zur Dreiecksebene verläuft, wobei der Schieber (C) einen Körper (1, 3) enthält, mit dem der erste Abstützpunkt (A1) und ein elastisch verformbarer Arm (4) verbunden sind, der einerseits mit dem zweiten Abstützpunkt (A2) verbunden ist und andererseits mit einer manuellen Einstelleinrichtung (M1) zusammenwirkt, um den zweiten Abstützpunkt (A2) zu verstellen und um den Reflektor (R) um die durch den ersten und den dritten Abstützpunkt (A1, A3) verlaufende Achse (Z) herum zu verschwenken, **dadurch gekennzeichnet, dass** der Arm (4) elastisch verformbar ist und dass der dritte Abstützpunkt (A3) in einer allgemein senkrecht zur Dreiecksebene verlaufenden Richtung (F) durch eine manuelle Einstelleinrichtung (M2) verstellbar ist, die sich von der Einstelleinrichtung (M1) unterscheidet.

2. Vorrichtung nach Anspruch 1, **dadurch gekennzeichnet, dass** der Körper (1, 3) des Schiebers (C) mit einem Antriebsglied (11) verbunden ist, um gleichzeitig und im gleichen Abstand den ersten und den zweiten Abstützpunkt (A1, A2) zu verstellen und um den Reflektor (R) um eine Achse (X2) herum zu verschwenken, die durch den dritten Abstützpunkt (A3) verläuft.

3. Vorrichtung nach Anspruch 2, **dadurch gekennzeichnet, dass** das Antriebsglied aus einem Elektromotor (11) besteht, dessen Antriebswelle (11a) mit dem Körper (1, 3) des Schiebers (C) verbunden ist, um ihn zu verschieben.

4. Vorrichtung nach Anspruch 1, **dadurch gekennzeichnet, dass** Haltemittel (10), beispielsweise Laschen vorgesehen sind, um den Körper (1, 3) des Schiebers (C) in der genannten, allgemein senkrecht zur Dreiecksebene verlaufenden Richtung (F) festzuhalten.

5. Vorrichtung nach einem der vorangehenden Ansprüche, **dadurch gekennzeichnet, dass** der Körper (1, 3) des Schiebers (C) und die mit dem elastisch verformbaren Arm (4) zusammenwirkende Einstelleinrichtung (M1) in der allgemein senkrecht zur Dreiecksebene verlaufenden Richtung (F) verschiebefest zueinander sind.

6. Vorrichtung nach Anspruch 5, **dadurch gekennzeichnet, dass** die manuelle Einstelleinrichtung (M1) durch den Körper (1, 3) des Schiebers (C) eingeschraubt ist und sich an einer Seite des elastisch verformbaren Arms (4) abstützt, die der mit dem zweiten Abstützpunkt (A2) verbundenen Seite gegenüberliegt.

7. Vorrichtung nach einem der vorangehenden Ansprüche, **dadurch gekennzeichnet, dass** die weitere manuelle Einstelleinrichtung (M2) mit dem dritten Abstützpunkt (A3) verbunden ist, um diesen zu verstellen und um den Reflektor (R) um die Achse (X1) herum zu verschwenken, die durch den ersten und den zweiten Abstützpunkt (A1, A2) verläuft.

8. Vorrichtung nach einem der vorangehenden Ansprüche, **dadurch gekennzeichnet, dass** der Schieber (C) allgemein eine V-Form aufweist, deren Basis (1) von einer Schiene (2) am festen Aufbau (B) geführt wird und deren Enden der beiden Schenkel (3, 4) von einer gegenüberliegenden Schiene (5) am genannten Aufbau geführt werden.

9. Vorrichtung nach Anspruch 8, **dadurch gekennzeichnet, dass** der erste Abstützpunkt (A1) mit der Basis (1) des Schiebers (C) verbunden ist und der eine Schenkel (4) des Schiebers (C) den elastisch verformbaren Arm bildet.
